# EUROPÄISCHE PATENTSCHRIFT

(11) **EP 2 835 282 B1**
(45) Veröffentlichungstag und Bekanntmachung des Hinweises auf die Patenterteilung: **12.06.2019**
(21) Anmeldenummer: 13179306.9
(22) Anmeldetag: 05.08.2013
(51) Int. Cl.: B60P 7/08, B60P 7/135, B60J 7/06

(54) **Nutzfahrzeugaufbau mit verschiebbarer Ladungssicherungseinrichtung**
Commercial vehicle structure with sliding load securing device
Châssis de véhicule utilitaire avec installation de sécurisation de chargement déplaçable

(43) Veröffentlichungstag der Anmeldung: 11.02.2015
(73) Patentinhaber: Schmitz Cargobull AG, 48341 Altenberge (DE)
(72) Erfinder: Kueper, Rolf, 48607 Ochtrup (DE); Borgmeier, Daniel, 48356 Nordwalde (DE); Epker, Josef, 48493 Wettringen (DE)
(74) Vertreter: Cohausz & Florack

(56) Entgegenhaltungen:
- EP-A1- 2 255 997
- EP-A1- 2 397 364
- DE-U1-202013 100 309
- NL-C- 2 007 539
- US-A- 4 439 076
- US-A- 4 969 784
- US-A1- 2008 143 133

## Beschreibung

Die Erfindung betrifft einen Nutzfahrzeugaufbau eines Anhängers oder Sattelanhängers mit wenigstens einem sich in Längsrichtung des Nutzfahrzeugaufbaus erstreckenden Holm, wobei an dem wenigstens einen Holm wenigstens eine Ladungssicherungseinrichtung zum Anbringen eines Sicherungsmittels vorgesehen ist, wobei die Ladungssicherungseinrichtung wenigstens einen am Holm gehaltenen Schlitten zum Verschieben der Ladungssicherungseinrichtung entlang des Holms aufweist, wobei die Ladungssicherungseinrichtung wenigstens einen vom Laderaum des Nutzfahrzeugaufbaus zugänglichen Befestigungsabschnitt zum Befestigen eines Sicherungsmittels an der Ladungssicherungseinrichtung aufweist. Ein solcher Nutzfahrzeugaufbau ist aus der US 4 439 076 A bekannt.

Nutzfahrzeuge in Form von Lastkraftwagen, Anhängern, Sattelanhängern oder dergleichen sind insbesondere für den Gütertransport über öffentliche Straßen bestimmt. Dazu weisen die Nutzfahrzeuge unterschiedliche Aufbauten auf, die einen Laderaum zur Aufnahme von Ladung aus zu transportierenden Gütern definieren oder umschließen können. Bei den Nutzfahrzeugaufbauten kann es sich beispielsweise um Kofferaufbauten oder Planenaufbauten handeln. Kofferaufbauten weisen typischerweise eine feste Stirnwand, feste Seitenwände, ein festes Dach und Rückwandtüren auf, die den Zugang zum Laderaum ermöglichen. Die Stirnwand, das Dach und die Seitenwände können als Paneele mit Decklagen, vorzugsweise aus Metall und/oder Kunststoff, und einem Kern aus einem geschäumten Kunststoff aufgebaut sein. Kofferaufbauten werden daher meist für den Trockentransport von feuchtigkeitsempfindlichen Gütern und wegen der bedarfsweise guten thermischen Isolation der Paneele für den Kühltransport von wärmeempfindlichen Gütern eingesetzt.

Bei Planenaufbauten ist wenigstens eine Seitenwand des Nutzfahrzeugs durch eine Plane verschlossen, die jedoch geöffnet werden kann, um Zugang zu dem Laderaum zu erhalten. Bei sogenannten Curtainsider-Aufbauten kann die Plane an wenigstens einer Seite des Nutzfahrzeugaufbaus, vorzugsweise mitsamt der dort vorgesehenen Rungen, nach vorne oder hinten aufgeschoben werden. Bei Planenaufbauten ist auch das Dach meist durch eine Plane verschlossen, die im Falle eines Schiebeverdecks jedoch nach vorne geschoben werden kann, um den Nutzfahrzeugaufbau von oben be- und entladen zu können. Zur Stabilisierung des Nutzfahrzeugaufbaus und zum Tragen der Planen weisen Planenaufbauten an den Außenseiten vertikale Rungen und horizontale Dachholme auf, welche miteinander verbunden sind und so die tragende Struktur der Planenaufbauten bilden. Die Rungen können über horizontale Aufstecklatten miteinander verbunden sein.

Die mit dem Nutzfahrzeugaufbau zu transportierende Ladung muss während des Transports gegen versehentliches Verrutschen gesichert werden. Andernfalls kann es zu einer erheblichen Beschädigung der Ladung und/oder des Nutzfahrzeugaufbaus kommen. Hierzu werden verschiedene Sicherungsmittel wie etwa Zurrgurte, Seile, Ketten, Netze und Ladebalken eingesetzt. Um die Sicherungsmittel je nach Ladezustand des Nutfahrzeugaufbaus an geeigneter Stelle am Nutzfahrzeugaufbau befestigen zu können, weisen bekannte Nutzfahrzeugaufbauten oft eine Reihe von in Längsrichtung verteilt angeordneter Ladungssicherungseinrichtungen auf. Bei diesen kann es sich beispielsweise um Ösen oder Ladungssicherungsleisten handeln.

Die zu transportierenden Güter werden meist möglichst weit vorne in den Nutzfahrzeugaufbau geladen, so dass ein Verrutschen der Güter während der Fahrt vermieden wird. Dennoch können Güter bedarfsweise gegen ein Verrutschen nach vorne gesichert werden. Bei nicht vollständig beladenen Nutzfahrzeugaufbauten wird zumeist hinter der Ladung eine Ladungssicherung gegenüber einem Verrutschen der Ladung nach hinten vorgenommen.

Bei Kofferaufbauten können zur Ladungssicherung Leisten in die Seitenwände oder das Dach, bedarfsweise in die dort vorgesehenen Paneele, eingelassen sein, in denen sich Stangen oder dergleichen zur Ladungssicherung festlegen lassen. Um die Ladungssicherung an die jeweilige Beladungssituation anpassen zu können, weisen die Leisten in regelmäßigen Abständen Befestigungspunkte für die Sicherungsmittel auf. Das Einbringen entsprechender Leisten ist jedoch aufwendig und daher mit erhöhten Kosten verbunden. Bei Planenaufbauten können entsprechende Leisten am Dach vorgesehen werden, was jedoch mit hohen Kosten verbunden ist und bei Schiebeverdecken die zu öffnende Länge oder Breite des Dachs einschränkt. Zur Ladungssicherung können auch Querbalken verwendet werden. Dann müssen jedoch spezielle Aufsatzlatten zwischen entsprechenden Rungen vorgesehen werden, die in regelmäßigen Abständen Aufnahmen für die Befestigung der Querbalken bereitstellen. Die speziellen Aufsatzlatten führen zu zusätzlichen Anschaffungskosten, und zwar auch deshalb, weil die Aufsatzlatten teilweise verloren gehen oder abhanden kommen. Im Übrigen sind Planenaufbauten von Nutzfahrzeugen bekannt, bei denen an unterschiedlichen Stellen entlang des Dachholms Ösen zum Festlegen von Sicherungsmitteln vorgesehen sind. Das Anbringen der Ösen am Dachholm ist jedoch aufwendig und daher teuer. Es sind also bereits viele unterschiedliche Möglichkeiten zur Sicherung der Ladung in Nutzfahrzeugaufbauten bekannt. Es besteht aber dennoch weiterer Optimierungsbedarf, und zwar insbesondere hinsichtlich des erforderlichen Aufwands und der Kosten.

Der vorliegenden Erfindung liegt daher die Aufgabe zugrunde, den eingangs genannten und zuvor näher beschriebenen Nutzfahrzeugaufbau derart auszugestalten und weiterzubilden, dass eine einfache und kostengünstige Ladungssicherung möglich ist.

Diese Aufgabe ist bei einem Nutzfahrzeugaufbau nach dem Oberbegriff von Anspruch 1 dadurch gelöst, dass die Ladungssicherungseinrichtung und/oder der Holm eine von einer Arretierstellung in eine Verschiebestellung und zurück verstellbare Arretiereinrichtung aufweist, dass der Schlitten in der Verschiebestellung der Arretiereinrichtung in Längsrichtung des Nutzfahrzeugaufbaus verschiebbar am Holm gehalten ist und dass der Schlitten in der Arretierstellung der Arretiereinrichtung in Längsrichtung des Nutzfahrzeugaufbaus am Holm festgelegt ist.

Durch die Verwendung eines am Holm gehaltenen und entlang des Holms verschiebbaren Schlittens kann die Ladungssicherungseinrichtung je nach Beladungssituation des Nutzfahrzeugaufbaus einfach und schnell in die gewünschte Position zur Befestigung des Sicherungsmittels verschoben werden. Es bedarf daher nur eines Befestigungsabschnitts oder jedenfalls weniger Befestigungsabschnitte zur variablen Ladungssicherung entsprechend der gegebenen Beladungssituation. Außerdem behindert die Ladungssicherungseinrichtung das Beladen des Nutzfahrzeugaufbaus durch das geöffnete Dach nicht oder nur geringfügig.

Im Übrigen kann die Ladungssicherung jeweils in der gewünschten Position erfolgen, indem die Ladungssicherungseinrichtung an einer geeigneten Stelle entlang des Holms festgelegt und der Befestigungsabschnitt mit einem geeigneten Sicherungsmittel verbunden wird. Hierzu ist eine Arretiereinrichtung vorgesehen, die sich von einer Arretierstellung in eine Verschiebestellung verstellen lässt. In der Arretierstellung sorgt die Arretiereinrichtung dafür, dass der Schlitten und damit die Ladungssicherungseinrichtung während der Ladungssicherung seine bzw. ihre Position längs des Holms beibehält. In der Verschiebestellung der Arretiereinrichtung kann jedoch der Schlitten und damit die Ladungssicherungseinrichtung entlang des Holms verschoben werden, etwa wenn sich die Beladungssituation geändert hat.

Die Arretiereinrichtung kann wahlweise am Holm und/oder an der Ladungssicherungseinrichtung vorgesehen sein. Besonders bevorzugt ist es jedoch, wenn die Arretiereinrichtung an der Ladungssicherungseinrichtung vorgesehen ist. Dann kann die Arretiervorrichtung mit der Ladungssicherungseinrichtung entlang des Holms verschoben werden. Andernfalls kann es erforderlich sein, mehrere Arretiereinrichtungen verteilt über die Länge des Holms vorzusehen. Dies kann bei einfach ausgebildeten Arretiereinrichtungen aber bedarfsweise toleriert werden.

Unter einer an wenigstens einem Holm gehaltenen Ladungssicherungseinrichtung oder unter einem an einem Holm gehaltenen Schlitten der Ladungssicherungseinrichtung wird vorliegend auch eine solche Ladungssicherungseinrichtung oder ein solcher Schlitten verstanden, der nur indirekt am Holm gehalten ist. Es kann also am Holm beispielsweise ein Längsträger oder ein Längsprofil montiert sein, dessen Zweck sich im Wesentlichen darin erschöpfen kann, die Ladungssicherungseinrichtung und/oder den Schlitten zu halten. Der Schlitten kann dabei an oder in dem Längsträger oder dem Längsprofil gehalten sein. Es ist also keine unmittelbare und direkte Verbindung zwischen dem Holm des Nutzfahrzeugs und der Ladungssicherungseinrichtung bzw. dem Schlitten erforderlich. Anders ausgedrückt kann ein Holm auch mit weiteren, die Ladungssicherungseinrichtung und/oder den Schlitten haltenden Mitteln ausgerüstet werden, selbst wenn diese nur dem Abstützen der Ladungssicherungseinrichtung und/oder dem Schlitten dienen. Vorzugsweise werden die entsprechenden Mittel jedoch wenigstens teilweise, insbesondere vollständig oder im Wesentlichen, vom Holm gehalten. Dabei ist jedoch auch bevorzugt, wenn diese Mittel die Zugänglichkeit zum Laderaum und/oder die für die Ladung zur Verfügung stehende Ladehöhe und/oder Ladebreite nicht zu sehr beeinträchtigen. Außerdem können die entsprechenden Mittel den konstruktiven Aufwand erhöhen, weshalb diese grundsätzlich weniger bevorzugt sind. Im Folgenden wird daher der Einfachheit halber im Wesentlichen ganz allgemein von der Verbindung der Ladungssicherungseinrichtung und/oder des Schlittens mit dem Holm gesprochen, ohne hier jeweils zwischen einer direkten und einer indirekten Verbindung zu unterscheiden. Dies kann insbesondere auch dann von Relevanz sein, wenn der Nutzfahrzeugaufbau, wie etwa bei Kofferaufbauten, eigentlich ohne einen entsprechenden Holm auskäme aber dennoch eine holmähnliche Struktur aufweist, um daran die Ladungssicherungseinrichtung und/oder den Schlitten zu montieren. Mit anderen Worten wird vorliegend der Begriff Holm entsprechend allgemein verstanden.

Bei einer ersten bevorzugten Ausgestaltung des Nutzfahrzeugaufbaus ist der wenigstens eine Holm einer Längsseite des Dachs des Nutzfahrzeugaufbaus zugeordnet. Dann stört die Ladungssicherungseinrichtung das Be- und Entladen höchstens unwesentlich. Zudem kann eine Ladungssicherung so einfach über die gesamte Höhe des Nutzfahrzeugaufbaus erfolgen.

Weiter vorzugsweise kann der wenigstens eine Holm das Dach wenigstens teilweise tragen. Alternativ oder zusätzlich kann der Holm von an den Längsseiten und/oder Ecken des Nutzfahrzeugaufbaus vorgesehenen Rungen getragen werden. Es kann sich also bei dem Nutzfahrzeugaufbau beispielsweise um einen Planenaufbau oder dergleichen handeln. Dann können meist ohnehin vorhandene Holme genutzt werden. Bei den Holmen von Planenaufbauten handelt es sich insbesondere um sogenannte Dachholme, welche das Dach zu den Längsseiten begrenzen und abstützen. Die Dachholme erstrecken sich zudem im Wesentlichen über die gesamte Länge des Nutzfahrzeugaufbaus. Die entsprechenden Holme werden vorzugsweise von Rungen getragen, wobei es sich bei diesen Rungen um in den Ecken des Nutzfahrzeugaufbaus vorgesehene Eckrungen und/oder an den Längsseiten zwischen den Eckrungen vorgesehene Rungen handeln kann. Bevorzugt sind dabei weiter Curtainsider-Aufbauten. Diese können sehr schnell be- und entladen werden, so dass hier eine schnelle und einfache Ladungssicherung besonders zweckmäßig ist. Bei Nutzfahrzeugaufbauten mit einem Schiebeverdeck bietet die Ladungssicherungseinrichtung den Vorteil, dass sie das Be- und Entladen jedenfalls nicht nennenswert behindert.

Anstelle von Planenaufbauten kann es sich bei dem Nutzfahrzeugaufbau auch um einen Kofferaufbau oder einen anderen Nutzfahrzeugaufbau handeln. Auch wenn Kofferaufbauten meist ohne einen Holm als Teil der tragenden Struktur des Nutzfahrzeugaufbaus auskommen, wie er typischerweise bei Planenaufbauten verwendet wird, kann auch bei Kofferaufbauten an den Längsseiten des Dachs ein Holm zur Anbindung der Ladungssicherungseinrichtung vorgesehen werden. Dabei kann der Holm unabhängig vom Nutzfahrzeugaufbau auch an anderen Stellen als am Dach vorgesehen sein. Denkbar ist auch, dass der Holm nicht dem Dach, sondern beispielsweise dem Boden oder einer Seitenwand des Nutzfahrzeugaufbaus zugeordnet ist. Dann ist es besonders zweckmäßig, wenn der Holm an einer Längsseite des Nutzfahrzeugaufbaus vorgesehen ist, etwa die seitliche Begrenzung des Bodens bildet.

Besonders zweckmäßig ist es, wenn der wenigstens eine Holm wenigstens einen sich in Längsrichtung des Nutzfahrzeugaufbaus erstreckenden Kanal aufweist. Dann kann der Schlitten in dem wenigstens einen Kanal aufgenommen und gehalten sein. Der Schlitten kann dann besser vor äußeren Einflüssen geschützt werden und platzsparender vorgesehen sein. In einem anderen Kanal des wenigstens einen Holms kann dann die Plane und wenigstens eine Runge unabhängig von der Ladungssicherungseinrichtung verschiebbar geführt sein. Alternativ oder zusätzlich ist der Kanal zum Laderaum hin geöffnet. Dies ist beispielsweise zweckmäßig, um die Zugänglichkeit des Befestigungsabschnitts vom Laderaum aus sicherzustellen. Der Kanal kann der Einfachheit halber einen im Wesentlichen rechteckigen oder quadratischen Querschnitt aufweisen. Alternativ oder zusätzlich kann der Kanal an seinem unteren Ende eine Öffnung in Form eines in Längsrichtung verlaufenden Schlitzes aufweisen. Durch diesen Schlitz kann der Befestigungsabschnitt leicht in den Laderaum ragen oder mit dem Schlitten verbunden sein. Zu einer oder beiden Seiten neben dem Schlitz kann der Kanal eine Auflagefläche zur Abstützung für den Schlitten und/oder die Ladungssicherungseinrichtung aufweisen, um den Schlitten und/oder die Ladungssicherungseinrichtung in vertikaler Richtung formschlüssig im Kanal zu halten.

Um den Kanal des Holms möglichst effektiv zu nutzen, kann in dem Kanal in Längsrichtung des Nutzfahrzeugaufbaus zwischen wenigstens zwei Schlitten wenigstens eine Runge gehalten sein. Bei Curtainsider-Aufbauten sind die Rungen über Schlitten oder Wagen verschiebbar in einem Holm gehalten, damit die mit den Rungen verbundenen Seitenplanen schnell aufgezogen werden können. Etwa in diesem Fall könnte der Kanal sowohl zur Führung der Rungen als auch zur Führung der Ladungssicherungseinrichtungen genutzt werden. Da die Ladungssicherungseinrichtungen in diesem Fall nur zwischen zwei Rungen hin und her verschoben werden können, kann es zweckmäßig sein, wenigstens zwei Ladungssicherungselemente an einem Holm vorzusehen, und zwar jede Ladungssicherungseinrichtung zwischen unterschiedlichen Rungen. Auf diese Weise kann eine hohe Flexibilität bei der Ladungssicherung realisiert werden. Es kann aber auch nur eine Ladungssicherung an wenigstens einem Holm vorgesehen sein, und zwar bedarfsweise in einem Kanal zwischen zwei benachbarten Rungen, insbesondere zwischen den Führungen der benachbarten Rungen in dem Kanal.

Um eine einfache und schnelle Ladungssicherung zu ermöglichen, kann der Befestigungsabschnitt wenigstens abschnittsweise im Laderaum des Nutzfahrzeugaufbaus vorgesehen sein. Andernfalls sollte der Befestigungsabschnitt vorzugsweise im Holm aufgenommen und durch wenigstens eine entsprechende Öffnung zugänglich sein.

Alternativ oder zusätzlich kann die Ladungssicherung vereinfacht und beschleunigt werden, wenn der Befestigungsabschnitt wenigstens eine durchgehende Öffnung zum Befestigen des Sicherungsmittels aufweist. In der Öffnung können bekannte Sicherungsmittel einfach und zuverlässig befestigt werden. Dazu bietet es sich insbesondere an, wenn die Öffnung in Form einer Öse zum Einhängen des Sicherungsmittels ausgebildet ist.

Vorzugsweise ist der Schlitten derart am Holm vorgesehen, dass der Schlitten in wenigstens einer Richtung quer zum Holm formschlüssig gegenüber dem Holm an oder in diesem gehalten ist. In der entsprechenden Richtung können dann im Falle der Ladungssicherung hohe Kräfte aufgenommen werden. Aus diesem Grunde und um die Ladungssicherungseinrichtung unverlierbar an oder in dem Holm zu halten, bietet es sich an, wenn der Schlitten in zwei zueinander senkrechten Richtungen quer zum Holm formschlüssig gegenüber dem Holm gehalten ist. Besonders bevorzugt ist es, wenn eine dieser Richtungen im Wesentlichen parallel zum Dach und die andere Richtung im Wesentlichen parallel zu einer Seitenwand verlaufen. Diese Richtungen können mit hinreichender Näherung auch als vertikal und horizontal bezeichnet werden, wobei davon ausgegangen wird, dass das Nutzfahrzeug auf einem horizontalen Untergrund steht. Im Zusammenhang mit der Erfindung wird daher unter einer vertikalen Richtung vorzugsweise eine Richtung verstanden, die parallel zu einer Seitenwand des Nutzfahrzeugaufbaus ist, und unter einer horizontal Richtung vorzugsweise eine Richtung verstanden, die parallel zum Dach und/oder dem Boden des Nutzfahrzeugaufbaus ist.

Längs des Holms ist der Schlitten und/oder die Ladungssicherungseinrichtung vorzugsweise formschlüssig und/oder kraftschlüssig gehalten, und zwar insbesondere in der Arretierstellung der Arretiereinrichtung. Auf diese Weise kann eine zuverlässige Ladungssicherung auch bei schwerer Ladung auf einfache und schnelle Art erreicht werden. Eine kraftschlüssige Arretierung kann bereitgestellt werden, indem der Schlitten und/oder die Ladungssicherungseinrichtung mit dem Kanal verschraubt wird. Die Schraube kann dabei in einfacher Weise durch einen Schlitz innerhalb des Kanals geführt sein, insbesondere wenn der Schlitz von unten zugänglich ist. Dann ist nämlich auch die entsprechende Schraube leicht zugänglich. Eine kraftschlüssige Arretierung kann aber auch bereitgestellt werden, indem wenigstens eine Reibfläche der Ladungssicherungseinrichtung gegen wenigstens eine Innenwand des Kanals gepresst wird. Dies kann durch Drehen eines Klemmmittels, etwa in Form eines Klemmblocks, erfolgen. Besonders bevorzugt ist es in diesem Zusammenhang, wenn zwei Reibflächen gegen einander gegenüberliegende Anlageflächen des Holms und/oder des Kanals gepresst werden. Dies lässt sich insbesondere dann leicht umsetzten, wenn die Anlageflächen im Wesentlichen parallel zur Seitenwand ausgerichtet sind.

Alternativ oder zusätzlich kann es zur Stabilisierung der Verbindung zwischen dem Holm einerseits und dem Schlitten und/oder der Ladungssicherungseinrichtung andererseits zweckmäßig sein, wenn der Schlitten in der Arretierstellung formschlüssig in ein Profil des Holms eingreift. Der Einfachheit halber kann dieses Profil an der nach innen weisenden Seite des Holms vorgesehen sein. Alternativ oder zusätzlich weist das Profil mehrere, insbesondere gleichmäßig voneinander beabstandete, Aufnahmen zur formschlüssigen Aufnahme eines Abschnitts des Schlittens und/oder der Ladungssicherungseinrichtung auf.

Um das Verschieben des Schlittens und/oder der Ladungssicherungseinrichtung zu vereinfachen, kann der Schlitten wenigstens eine Laufrolle und der Holm wenigstens eine sich in Längsrichtung des Holms erstreckende Lauffläche aufweisen. Dabei ist die Lauffläche vorzugsweise so ausgebildet, dass die Laufrolle beim Verschieben des Schlittens längs des Holms an der Lauffläche abrollen kann. Auf diese Weise kann ein Schlitten in Form eines Wagens bereitgestellt werden. Der Schlitten kann dann an oder in dem Holm infolge der Lauffläche reibungsarm geführt sein. Bevorzugt ist es, wenn die wenigstens eine Lauffläche im Wesentlichen horizontal, also im Wesentlichen parallel zum Dach und/oder zum Boden des Nutzfahrzeugaufbaus, ausgerichtet ist. Dann kann der Schlitten auf der Lauffläche stehen und sich gegenüber dieser abstützen. Dabei können beispielsweise zwei Laufflächen zu beiden Seiten eines Schlitzes am unteren Ende des Kanals vorgesehen sein. Dies erhöht die Stabilität des Schlittens. Außerdem kann der Befestigungsabschnitt leicht mit dem Schlitten verbunden werden. Alternativ oder zusätzlich kann aber auch wenigstens eine vertikal ausgerichtete Lauffläche für wenigstens eine bedarfsweise horizontal ausgerichtete Führungsrolle vorgesehen sein. Diese kann der seitlichen Führung und Abstützung des Schlittens im Kanal dienen.

Zum einfachen und schnellen Bedienen der Arretiereinrichtung kann ein von unten bedienbares Betätigungsmittel vorgesehen sein. Über dieses Betätigungsmittel kann die Arretiereinrichtung vorzugsweise von der Arretierstellung in die Verschiebestellung und zurück verstellt werden. Dabei wird die Zugänglichkeit des Betätigungsmittels dadurch verbessert, dass sich das Betätigungsmittel gegenüber dem Holm nach unten in den Laderaum hinein erstreckt. Dazu kann beispielsweise im unteren Bereich des Kanals ein Schlitz vorgesehen sein, der sich in Längsrichtung des Kanals erstreckt. Zudem kann das Betätigungsmittel so ausgebildet sein, dass es zur Betätigung um eine Achse gedreht wird, die sich quer zum Holm und im Wesentlichen senkrecht zum Dach und/oder Boden erstreckt. Die Betätigung kann dabei durch ein Werkzeug erfolgen. Als Betätigungsmittel kommt beispielsweise eine Schraube in Frage, mit der der Schlitten kraftschlüssig gegen den Kanal gepresst wird. Es kann sich aber auch um eine Art Stift handeln, über den eine Klemmeinrichtung betätigt, insbesondere von einer ersten nicht klemmenden Position in eine zweite klemmende Position und zurück gedreht, wird.

Als Sicherungsmittel bieten sich ein Stab, eine Querstrebe, ein Seil, ein Gurt, ein Spanngurt, ein Netz, eine Plane und/oder eine Trennwand an. Diese gewährleisten eine zuverlässige Ladungssicherung. Im Übrigen können die Sicherungsmittel bedarfsweise direkt oder indirekt an dem Befestigungsabschnitt befestigt sein.

Bei einer besonders bevorzugten Ausgestaltung des Nutzfahrzeugaufbaus sind an zwei gegenüberliegenden Längsseiten des Nutzfahrzeugaufbaus Holme vorgesehen. Zudem ist an jedem Holm wenigstens eine Ladungssicherungseinrichtung vorzugsweise in einer zuvor beschrieben Weise gehalten. Auf diese Weise kann die Ladungssicherung von beiden Seiten erfolgen. Bedarfsweise können in einem Holm oder in beiden Holmen auch wenigstens zwei Ladungssicherungseinrichtungen der genannten Art vorgesehen sein.

Im Falle von Ladungssicherungseinrichtungen, die an Holmen an einander gegenüberliegenden Längsseiten des Nutzfahrzeugaufbaus vorgesehen sind, bietet es sich an, wenn die Ladungssicherungseinrichtungen über wenigstens eine Querstrebe miteinander verbunden sind. Diese kann dann in einfacher Weise direkt zur Ladungssicherung eingesetzt werden. Die Querstrebe kann aber auch zum Befestigen von Sicherungsmitteln etwa in Form eines Netzes, einer Trennwand oder von vertikal ausgerichteten und bedarfsweise im Boden verankerten Stangen genutzt werden. Um das maximale Ladevolumen des Nutzfahrzeugaufbaus nicht zu beeinträchtigen oder das Be- und Entladen durch das geöffnete Dach nicht zu behindern, kann die Querstrebe demontierbar an den Befestigungsabschnitten der Ladungssicherungseinrichtungen vorgesehen sein.

Die Erfindung wird nachfolgend anhand einer lediglich Ausführungsbeispiele darstellenden Zeichnung näher erläutert. In der Zeichnung zeigt
- Fig. 1: einen ersten erfindungsgemäßen Nutzfahrzeugaufbau in einer perspektivischen Ansicht,
- Fig. 2: ein Detail des Nutzfahrzeugaufbaus aus Fig. 1, in einer Schnittansicht quer zu einem Holm des Nutzfahrzeugaufbaus,
- Fig. 3: die Ladungssicherungseinrichtung des Nutzfahrzeugaufbaus aus Fig. 1 in einer perspektivischen Ansicht,
- Fig. 4: ein Detail eines zweiten erfindungsgemäßen Nutzfahrzeugaufbaus in einer Darstellung gemäß Fig. 2,
- Fig. 5: das Detail aus Fig. 4 in einer Schnittansicht entlang des Schnitts V-V aus Fig. 4 und
- Fig. 6: das Detail aus Fig. 4 in einer Seitenansicht.

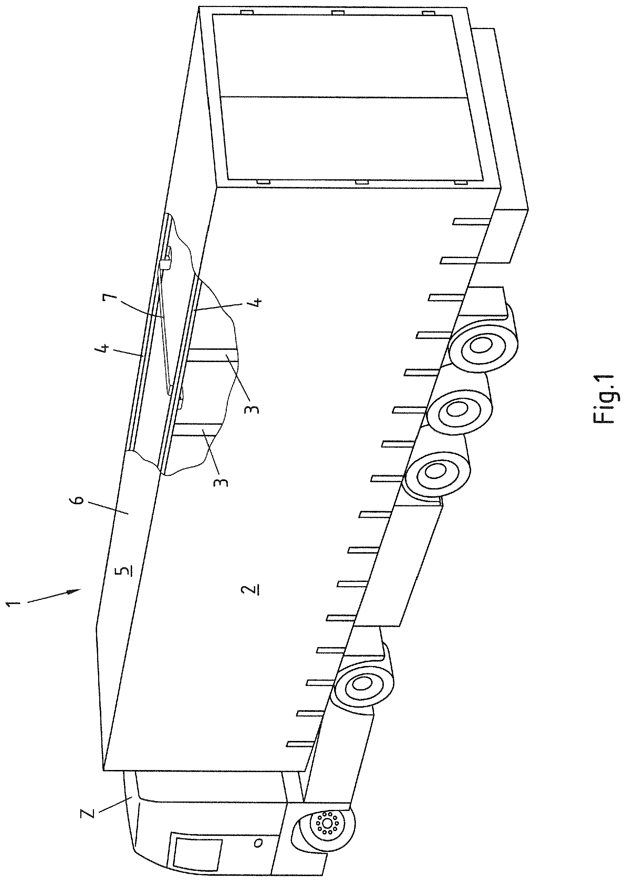

In der Fig. 1 ist ein Nutzfahrzeugaufbau 1 in Form eines Planenaufbaus eines Sattelanhängers dargestellt, der von einem Zugfahrzeug Z gezogen wird. Der Planenaufbau stellt einen sogenannten Curtainsider-Aufbau dar, bei dem die Seitenplane 2 mitsamt den mit der Seitenplane verbundenen Rungen 3 nach vorne oder hinten aufgeschoben werden kann. Die Rungen 3 verbinden den Boden des Nutzfahrzeugaufbaus 1 mit Holmen 4 im Dach 5 des Nutzfahrzeugaufbaus 1. Die Konstruktion aus Holmen 4 und Rungen 3 hält die Planen 2,6 und bildet zusammen mit dem Boden die tragende Struktur des Nutzfahrzeugaufbaus 1. An der Längsseite des Dachs 5 weist der Nutzfahrzeugaufbau 1 einen sich in Längsrichtung des Nutzfahrzeugaufbaus erstreckenden Holm 4 auf, der auch als Dachholm bezeichnet werden kann. An diesem Holm 4 ist das nicht näher dargestellte Schiebeverdeck des Dachs 5 befestigt, über welches die Plane 6 des Dachs 5 nach vorne geschoben werden kann, um den Nutzfahrzeugaufbau 1 von oben beladen zu können.

In dem freigeschnittenen Bereich des Nutzfahrzeugaufbaus 1 von Fig.1 ist ein Sicherungsmittel 7 zur Ladungssicherung in Form einer Querstrebe zu erkennen, die sich zwischen zwei Ladungssicherungseinrichtungen 8 erstreckt, die in den einander gegenüberliegenden Holmen 4 der Längsseiten des Nutzfahrzeugaufbaus 1 gehalten sind. Die Ladungssicherungseinrichtungen 8 können mitsamt dem Sicherungsmittel 7 in Form der Querstrebe in Längsrichtung des Nutzfahrzeugaufbaus 1 verschoben werden. In der gewünschten Position entlang der Holme 4 können die Ladungssicherungseinrichtungen 8 an den Holmen 4 festgelegt werden. Wenn das Sicherungsmittel 7 in Form der Querstrebe in dieser Position die Ladung formschlüssig hintergreift, kann die Ladung gegen versehentliches Verrutschen nach hinten gesichert werden. Alternativ oder zusätzlich können an dem Sicherungsmittel 7 in Form der Querstrebe noch weitere Sicherungsmittel wie Stäbe oder Zurrgurte zum Zwecke der Ladungssicherung montiert werden.

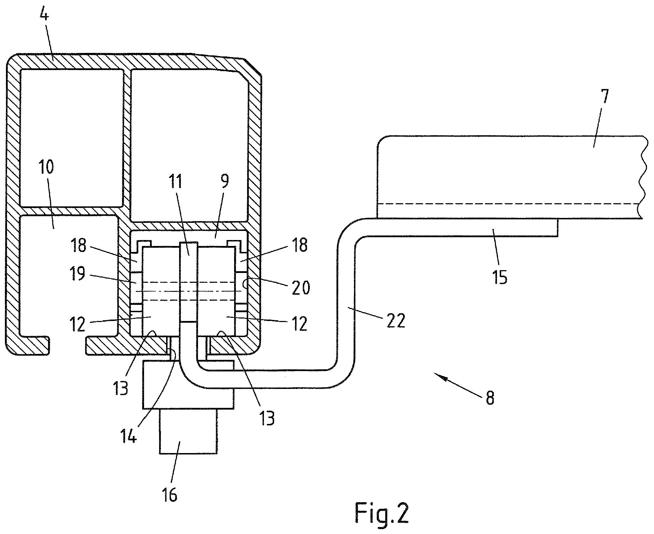

In der Fig. 2 ist die Aufnahme einer Ladungssicherungseinrichtung 8 in einem in Querrichtung geschnittenen Holm 4 dargestellt. Der Holm 4 des dargestellten und insoweit bevorzugten Nutzfahrzeugaufbaus 1 weist an seiner Unterseite zwei Kanäle 9,10 auf, die sich in Längsrichtung des Holms 4 und somit in Längsrichtung des Nutzfahrzeugaufbaus 1 erstrecken. In einem der Kanäle 9 ist die Ladungssicherungseinrichtung 8 am Holm 4 gehalten. Dazu ist ein Schlitten 11 der Ladungssicherungseinrichtung 8 in den Kanal 9 eingeführt. Der Schlitten 11 ist beim dargestellten und insoweit bevorzugten Nutzfahrzeugaufbau 1 als Wagen ausgebildet und weist Laufrollen 12 auf, die auf unteren Laufflächen 13 des Kanals aufstehen und längs des Holms 4 abrollen können. Die Laufflächen 13 sind dabei zu beiden Seiten eines nach unten geöffneten und sich in Längsrichtung des Holms 4 erstreckenden Schlitzes 14 vorgesehen. Durch den Schlitz 14 ist der Schlitten 11 der Ladungssicherungseinrichtung 8 mit einem Befestigungsabschnitt 15 zur Befestigung eines Sicherungsmittels 7 verbunden. Beim dargestellten und insoweit bevorzugten Nutzfahrzeugaufbau 1 handelt es sich bei dem Sicherungsmittel 7 um eine Querstrebe. Durch den Schlitz 14 ist zudem ein Betätigungsmittel 16 nach unten in den Laderaum geführt, über das eine Arretiereinrichtung 17 betätigt werden kann.

Beim dargestellten und insoweit bevorzugten Betätigungsmittel 16 weist dieses am unteren Ende einen Außenvierkant auf, so dass das Betätigungsmittel 16 mit Hilfe eines Innenvierkants vom Laderaum aus bedient werden kann. Wird die Arretiereinrichtung 17 über das Betätigungsmittel 16 betätigt, kann die Arretiereinrichtung 17 von einer Verschiebestellung in eine Arretierstellung verstellt werden. In der Verschiebestellung sind beim dargestellten und insoweit bevorzugten Nutzfahrzeugaufbau 1 zwei Reibflächen 18 von den Seitenwänden des Kanals 9 beabstandet oder lediglich in leichtem Kontakt mit den Seitenwänden des Kanals 9. In der Arretierstellung werden die Reibflächen 18 jedoch gegen die einander gegenüberliegenden Seitenwände des Kanals 9 gepresst, um den Schlitten 11 kraftschlüssig längs des Kanals 9 zu fixieren.

In dem weiteren Kanal 10 des Holms 4, der beim dargestellten und insoweit bevorzugten Nutzfahrzeugaufbau 1 neben dem Kanal 9 mit dem Schlitten 11 der Ladungssicherungseinrichtung 8 angeordnet ist, aber auch an anderer Stelle vorgesehen sein könnte, sind nicht dargestellte Führungen der an der entsprechenden Längsseite des Nutzfahrtzeugaufbaus 1 vorgesehenen Rungen 3 verschiebbar geführt. Die Rungen 3 sind mit der entsprechenden Seitenplane 2 verbunden, so dass die Seitenplane 2 unabhängig von der Ladungssicherungseinrichtung 8 aufgeschoben werden kann, wobei die Führungen der Rungen 3 nach vorne oder nach hinten verschoben werden.

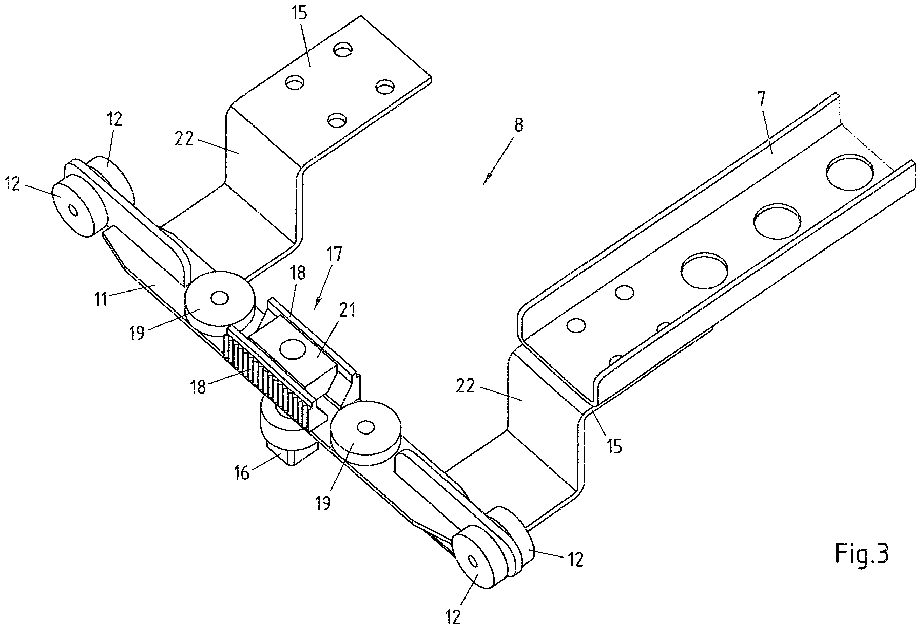

Die Ladungssicherungseinrichtung 8 ist separat in der Fig. 3 dargestellt. An den beiden äußeren Enden des Schlittens 11 sind jeweils zwei Laufrollen 12 vorgesehen, von denen jeweils zwei Laufrollen 12 auf einer Lauffläche 13 abrollen, während der Schlitten 11 entlang des Holms 4 verstellt wird. Der Schlitten 11 weist weiter innen noch zwei Führungsrollen 19 auf, die an seitlichen Laufflächen 20 des Kanals 9 ablaufen. Die seitlichen Laufflächen 20 werden bei dem dargestellten und insoweit bevorzugten Nutzfahrzeugaufbau 1 von denselben Seitenwänden des Kanals 9 gebildet, an die in der Arretierstellung der Arretiereinrichtung 17 die Reibflächen 18 gepresst werden. Die Laufrollen 12 und Führungsrollen 19 könnten auch an anderen Stellen entlang des Schlittens 11 vorgesehen sein.

Bei dargestellten und insoweit bevorzugten Nutzfahrzeugaufbau 1 ist mittig am Schlitten 11 bzw. zwischen den Führungsrollen 19 die Arretierungseinrichtung 17 vorgesehen. Diese weist einen Klemmblock 21 auf, der mit dem Betätigungsmittel 16 verbunden ist. Durch das Drehen des Betätigungsmittels 16 kann auch der Klemmblock 21 gedreht werden. Soweit der Klemmblock 21 in Längsrichtung des Schlittens 11 ausgerichtet ist, befindet sich die Arretiereinrichtung 17 in der Verschiebestellung, in der der Schlitten 11 problemlos im Kanal 9 hin und her verschoben werden kann. Durch das Drehen des Klemmblocks 21 drückt dieser die Reibflächen 18 zu den gegenüberliegenden Seiten des Schlittens 11 nach außen. Dadurch werden die Reibflächen 18 von innen an die Seitenwände des Kanals 9 gepresst und der Schlitten 11 kraftschlüssig im Kanal 9 gehalten. Grundsätzlich wären aber auch andere kraftschlüssige oder Klemmverbindungen zwischen dem Holm 4 und der Ladungssicherungseinrichtung 8 denkbar.

Die dargestellte und insoweit bevorzugte Ladungssicherungseinrichtung weist zwei Befestigungsabschnitte 15 zum Befestigen von Sicherungsmitteln 7 zur Ladungssicherung auf. Einer dieser der Befestigungsabschnitte 15 ist mit einem Sicherungsmittel 7 in Form einer Querstrebe verbunden. Der Befestigungsabschnitt 15 ist mit dem Schlitten 11 über ein mehrfach gebogenes Verbindungsstück 22 verbunden, das von unten durch den Schlitz 14 im Kanal 9 des Holms 4 geführt ist. Zudem ist das Verbindungsstück 22 so gebogen, dass der Befestigungsabschnitt 15 nahe der Dachplane 6 positioniert ist, um keine unnötige Ladehöhe unterhalb des Befestigungsabschnitts 15 zu verlieren. Das Sicherungsmittel 7 in Form der Querstrebe kann vom Befestigungsabschnitt 15 demontiert werden, um das Be- und Entladen nicht zu behindern.

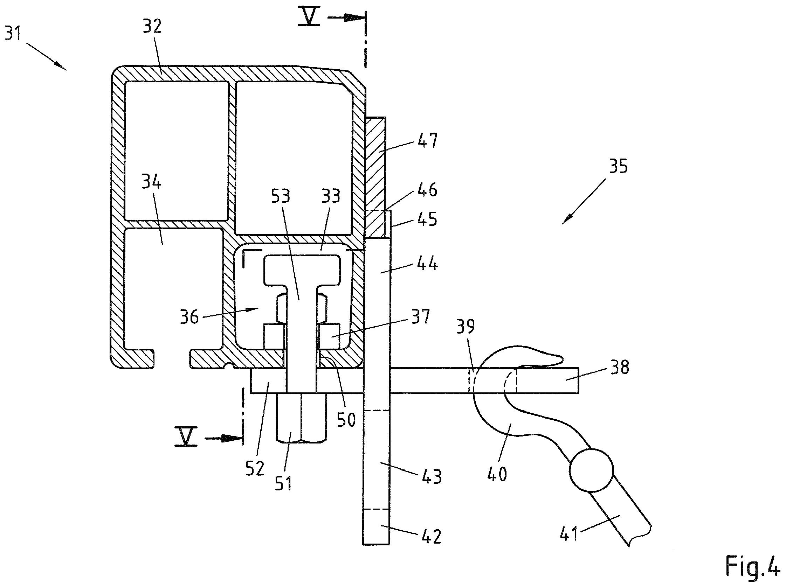

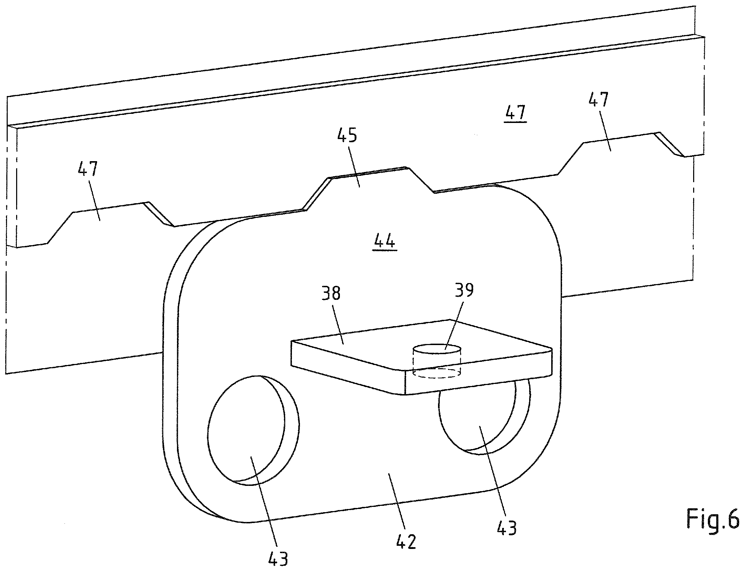

In der Fig. 4 ist ein Detail eines weiteren Nutzfahrzeugaufbaus 31 analog zu der Darstellung gemäß Fig. 2 dargestellt. Der Holm 32 umfasst die gleichen Kanäle 33,34 wie der in der Fig. 2 dargestellte Holm 4. In dem Holm 32 ist jedoch eine andere Ladungssicherungseinrichtung 35 gehalten. Die Ladungssicherungseinrichtung 35 weist einen Schlitten 36 auf, der keine Laufrollen oder Führungsrollen aufweist. Der Schlitten 36 kann aber dennoch bedarfsweise im Kanal 9 nach vorne oder hinten verschoben werden, wozu der Schlitten 36 eine Gleitplatte 37 umfasst, mit der der Schlitten 36 auf der Unterseite des Kanals 33 aufliegt. An der Unterseite der Ladungssicherungseinrichtung 35 ist ein Befestigungsabschnitt 38 vorgesehen, der seitlich in den Laderaum hineinragt. Der Befestigungsabschnitt 38 weist eine ösenförmige Öffnung 39 auf, in die ein Haken 40 eines Sicherungsmittels 41 in Form eines Zurrgurts eingehängt ist. Ein weiterer Befestigungsabschnitt 42 der Ladungssicherungseinrichtung 35 weist nach unten in den Laderaum hinein, was insbesondere in der Fig. 6 dargestellt ist.

Dieser Befestigungsabschnitt 42 weist zwei ösenförmige Öffnungen 43 zum Befestigen von Sicherungsmitteln auf. Ferner weist die Ladungssicherungseinrichtung 35 seitlich des Holms 32 eine Fixierungsvorrichtung 44 mit einem Vorsprung 45 auf, der in eine Aussparung 46 eines am Holm 32 vorgesehenen Profils 47 eingreift. Durch das Eingreifen des Vorsprungs 45 in die Aussparung 46 des Profils 47 wird ein Formschluss zwischen der Ladungssicherungseinrichtung 35 und dem Holm 32 erreicht. Damit die Ladungssicherungseinrichtung 35 in vielen verschiedenen Positionen entlang des Holms 32 festgelegt werden kann, weist das Profil 47 eine Vielzahl von entsprechenden Aufnahmen 46 in vorzugsweise regelmäßigen Abständen auf.

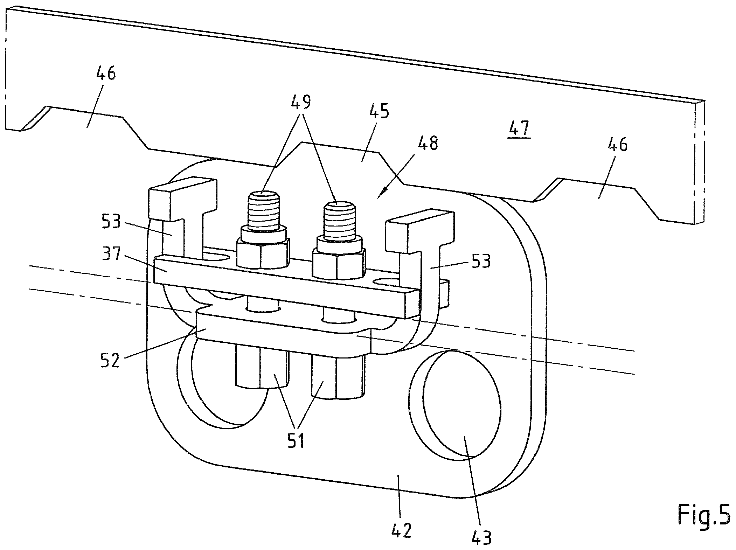

Zum Arretieren der Ladungssicherungseinrichtung 35 am Holm 32 weist die Ladungssicherungseinrichtung 35, wie insbesondere in der Fig. 5 dargestellt ist, eine Arretierungseinrichtung 48 auf, die zwei Schrauben 49 umfasst, obwohl grundsätzlich eine Schraube ausreichen könnte. Die Schraubenköpfe stehen gegenüber dem Holm 32 durch einen Schlitz 50 des Kanals 33 nach unten in den Laderaum des Nutzfahrzeugaufbaus 31 vor und bilden so Betätigungsmittel 51 zum Betätigen der Arretierungseinrichtung 48. Das Betätigen des Betätigungsmittels 51 umfassend einen Außenvierkant kann mittels eines Innenvierkants von unterhalb des Holms 32 erfolgen. Dadurch werden die Schrauben 49 angezogen und die Gleitplatte 37 des Schlittens 36 der Arretierungseinrichtung 35 gegen den unteren Abschnitt des Kanals 33 gepresst. In diesem Fall befindet sich die Arretiereinrichtung 35 in der dargestellten Arretierstellung. Zum Aufbringen der erforderlichen Kräfte zum Erreichen eines Kraftschlusses weist die Ladungssicherungseinrichtung 35 eine Konterplatte 52 auf, die durch das Anziehen der Schrauben 49 von unten gegen den Kanal 33 gepresst wird. Beim dargestellten und insoweit bevorzugten Nutzfahrzeugaufbau 31 sind eine kraftschlüssige und eine formschlüssige Verbindung mit dem Holm 32 vorgesehen. Alternativ könnte jedoch auch die kraftschlüssige oder die formschlüssige Verbindung zwischen dem Holm 32 und der Ladungssicherungseinrichtung 35 ausreichen, um die Ladungssicherungseinrichtung 35 entlang des Holms 32 zu fixieren.

Werden die Schrauben 49 gelöst, gelangt die Ladungssicherungseinrichtung 35 in die Verschiebestellung, in der die Ladungssicherungseinrichtung 35 entlang des Holms 32 verschoben werden kann. Dabei wird die Pressung des Kanals 33 zwischen der Gleitplatte 37 und der Konterplatte 52 aufgehoben und die Ladungssicherungseinrichtung 35 abgesenkt. Dadurch gelangt zudem der Vorsprung 45 der Fixiervorrichtung 44 aus der Aufnahme 46 des korrespondierenden Profils 47. Das Absenken der Ladungssicherungseinrichtung 35 ist beim dargestellten und insoweit bevorzugten Nutzfahrzeugaufbau 31 durch zwei von unten durch den Schlitz 50 des Kanals 33 in den Kanal 33 eingeführte Stifte 53 möglich, die einen breiteren Kopf aufweisen. Der Kopf ist so breit, dass er in der entsprechenden Ausrichtung nicht durch den Schlitz 50 des Kanals 33 hindurch passt. Eine unverlierbare Montage der Ladungssicherungseinrichtung 35 im Holm 32 könnte aber auch dadurch erreicht werden, dass sich die Schrauben 49 nicht von den an deren Enden vorgesehenen Muttern oder der Gleitplatte 37 lösen lassen.

## Patentansprüche

1. Nutzfahrzeugaufbau (1,31) eines Anhängers oder Sattelanhängers, mit wenigstens einem sich in Längsrichtung des Nutzfahrzeugaufbaus (1,31) erstreckenden Holm (4,32), wobei an dem wenigstens einen Holm (4,32) wenigstens eine Ladungssicherungseinrichtung (8,35) zum Anbringen eines Sicherungsmittels (7,41) vorgesehen ist, wobei die Ladungssicherungseinrichtung (8,35) wenigstens einen am Holm (4,32) gehaltenen Schlitten (11,36) zum Verschieben der Ladungssicherungseinrichtung (8,35) entlang des Holms (4,32) aufweist, wobei die Ladungssicherungseinrichtung (8,35) wenigstens einen vom Laderaum des Nutzfahrzeugaufbaus (1,31) zugänglichen Befestigungsabschnitt (15,38,42) zum Befestigen eines Sicherungsmittels (7,41) an der Ladungssicherungseinrichtung (8,35) aufweist,
**dadurch gekennzeichnet, dass**
die Ladungssicherungseinrichtung (8,35) und/oder der Holm (4,32) eine von einer Arretierstellung in eine Verschiebestellung und zurück verstellbare Arretiereinrichtung (17,48) aufweist, dass der Schlitten (11,36) in der Verschiebestellung der Arretiereinrichtung (17,48) in Längsrichtung des Nutzfahrzeugaufbaus (1,31) verschiebbar am Holm (4,32) gehalten ist und dass der Schlitten (11,36) in der Arretierstellung der Arretiereinrichtung (17,48) in Längsrichtung des Nutzfahrzeugaufbaus (1,31) am Holm (4,32) festgelegt ist.

2. Nutzfahrzeugaufbau nach Anspruch 1,
**dadurch gekennzeichnet, dass**
der wenigstens eine Holm (4,32) einer Längsseite des Dachs (5) des Nutzfahrzeugaufbaus (1,31) zugeordnet ist.

3. Nutzfahrzeugaufbau nach Anspruch 1 oder 2,
**dadurch gekennzeichnet, dass**
der wenigstens eine Holm (4,32) das Dach (5) trägt und/oder von, vorzugsweise an den Längsseiten und/oder Ecken des Nutzfahrzeugaufbaus (1,31) vorgesehenen, Rungen (3) getragen wird.

4. Nutzfahrzeugaufbau nach einem der Ansprüche 1 bis 3,
**dadurch gekennzeichnet, dass**
der Holm (4,32) einen sich in Längsrichtung des Nutzfahrzeugaufbaus (1,31) erstreckenden und zum Laderaum hin geöffneten Kanal (9,33) umfasst und dass der wenigstens eine Schlitten (11,36) im Kanal (9,33) aufgenommen und gehalten ist.

5. Nutzfahrzeugaufbau nach Anspruch 4,
**dadurch gekennzeichnet, dass**
in dem Kanal (9,33) des Holms (4,32) in Längsrichtung des Nutzfahrzeugaufbaus (1,31) zwischen wenigstens zwei Schlitten (11,36) wenigstens eine Runge (3) gehalten ist.

6. Nutzfahrzeugaufbau nach einem der Ansprüche 1 bis 5,
**dadurch gekennzeichnet, dass**
der Befestigungsabschnitt (15,38,42) wenigstens abschnittsweise im Laderaum des Nutzfahrzeugaufbaus (1,31) vorgesehen ist.

7. Nutzfahrzeugaufbau nach einem der Ansprüche 1 bis 6,
**dadurch gekennzeichnet, dass**
der Befestigungsabschnitt (15,38,42) wenigstens eine durchgehende Öffnung (39,43) zum Befestigen des Sicherungsmittels (7,41) aufweist und dass, vorzugsweise, die Öffnung (39,43) in Form einer Öse zum Einhängen des Sicherungsmittels (7,41) ausgebildet ist.

8. Nutzfahrzeugaufbau nach einem der Ansprüche 1 bis 7,
**dadurch gekennzeichnet, dass**
der Schlitten (11,36) in wenigstens einer Richtung quer zum Holm (4,32) formschlüssig gegenüber dem Holm (4,32) gehalten ist.

9. Nutzfahrzeugaufbau nach einem der Ansprüche 1 bis 8,
**dadurch gekennzeichnet, dass**
der Schlitten (11,36) längs des Holms (4,32) formschlüssig und/oder kraftschlüssig gehalten ist.

10. Nutzfahrzeugaufbau nach einem der Ansprüche 1 bis 9,
**dadurch gekennzeichnet, dass**
der Schlitten (36) in der Arretierposition formschlüssig in ein, vorzugsweise an der nach innen weisenden Seite des Holms (32) vorgesehenes, Profil (47) eingreift.

11. Nutzfahrzeugaufbau nach einem der Ansprüche 1 bis 10,
**dadurch gekennzeichnet, dass**
der Schlitten (11) wenigstens eine Laufrolle (12) und der Holm (4) wenigstens eine sich in Längsrichtung des Holms (4) erstreckende Lauffläche (13) aufweisen und dass die Lauffläche (13) derart ausgebildet ist, dass die Laufrolle (12) beim Verschieben des Schlittens (11) längs des Holms (4) an der Lauffläche (13) abrollen kann.

12. Nutzfahrzeugaufbau nach einem der Ansprüche 1 bis 11,
**dadurch gekennzeichnet, dass**
die Arretiereinrichtung (17,48) ein von unten bedienbares, vorzugsweise sich gegenüber dem Holm (4,32) nach unten in den Laderaum erstreckendes, Betätigungsmittel (16,51) zum Verstellen der Arretiereinrichtung (17,48) von der Arretierstellung in die Verschiebestellung und zurück aufweist.

13. Nutzfahrzeugaufbau nach einem der Ansprüche 1 bis 12,
**dadurch gekennzeichnet, dass**
ein Stab, eine Querstrebe, ein Seil, ein Gurt, ein Spanngurt, ein Netz, eine Plane und/oder eine Trennwand als Sicherungsmittel (7,41) direkt oder indirekt an dem Befestigungsabschnitt (15,38,42) befestigt ist.

14. Nutzfahrzeugaufbau nach einem der Ansprüche 1 bis 13,
**dadurch gekennzeichnet, dass**
an zwei gegenüberliegenden Längsseiten des Nutzfahrzeugs (31) jeweils ein Holm (4,32) vorgesehen ist und dass an jedem Holm (4,32) wenigstens eine Ladungssicherungseinrichtung (7,41) gehalten ist.

15. Nutzfahrzeugaufbau nach einem der Ansprüche 1 bis 14,
**dadurch gekennzeichnet, dass**
zwei Ladungssicherungseinrichtungen (8) an gegenüberliegenden Längsseiten des Nutzfahrzeugaufbaus (1) über wenigstens eine, vorzugsweise demontierbare, Querstrebe miteinander verbunden sind.

## Claims

1. Commercial vehicle superstructure (1,31) of a trailer or semitrailer, comprising at least one rail (4,32) extending in the longitudinal direction of the commercial vehicle superstructure (1,31), whereby at least one load securing device (8,35) is provided on the at least one rail (4,32) for attaching a securing means (7,41), wherein the load securing device (8,35) has at least one slide (11,36) held on the rail (4,32) for displacing the load securing device (8,35) along the rail (4,32), wherein the load securing device (8,35) has at least one fastening section (15,38,42) accessible from the loading space of the commercial vehicle superstructure (1,31) for fastening a securing means (7,41) to the load securing device (8,35),
**characterised in that**
the load securing device (8,35) and/or the rail (4,32) comprises a locking device (17,48) adjustable from a locking position into a displacement position and back, **in that** the slide (11,36) is held in the displacement position of the locking device (17,48), displaceable on the rail (4,32) in the longitudinal direction of the commercial vehicle superstructure (1,31), and **in that** the slide (11,36) is fixed to the rail (4,32) in the locking position of the locking device (17,48) in the longitudinal direction of the commercial vehicle superstructure (1,31).

2. Commercial vehicle superstructure according to claim 1,
**characterised in that**
the at least one rail (4,32) is associated to a longitudinal side of the roof (5) of the commercial vehicle superstructure.

3. Commercial vehicle superstructure according to claim 1 or 2,
**characterised in that**
the at least one rail (4, 32) supports the roof (5) and/or is supported by stanchions (3), preferably provided on the longitudinal sides and/or corners of the commercial vehicle superstructure (1,31).

4. Commercial vehicle superstructure according to any one of claims 1 to 3,
**characterised in that**
the rail (4, 32) comprises a channel (9,33) extending in the longitudinal direction of the commercial vehicle superstructure (1, 31) and opening towards the loading space, and **in that** the at least one slide (11, 36) is received and is held in the channel (9, 33).

5. Commercial vehicle superstructure according to claim 4,
**characterised in that**
at least one stanchion (3) is held in the channel (9,33) of the rail (4,32) in the longitudinal direction of the commercial vehicle superstructure (1,31) between at least two slides (11,36).

6. Commercial vehicle superstructure according to any one of claims 1 to 5,
**characterised in that**
the fastening section (15,38,42) is at least sectionally provided in the loading space of the commercial vehicle superstructure (1,31).

7. Commercial vehicle superstructure according to any one of claims 1 to 6,
**characterised in that**
the fastening section (15, 38, 42) comprises at least one throughgoing opening (39, 43) for fastening the securing means (7, 41) and that, preferably, the opening (39, 43) is designed in the form of an eyelet for suspending the securing means (7, 41).

8. Commercial vehicle superstructure according to any one of claims 1 to 7,
**characterised in that**
the slide (11,36) is positively secured relative to the rail (4,32) in at least one direction transverse to the rail (4,32).

9. Commercial vehicle superstructure according to any one of claims 1 to 8,
**characterised in that**
the slide (11,36) is positively and/or frictionally secured along the rail (4, 32).

10. Commercial vehicle superstructure according to any one of claims 1 to 9,
**characterised in that**
in the locking position the slide (36) positively engages with a profile (47), preferably provided on the inwardly facing side of the rail (32).

11. Commercial vehicle superstructure according to any one of claims 1 to 10,
**characterised in that**
the slide (11) comprises at least one track roller (12) and the rail (4) comprises at least one running surface (13) extending in the longitudinal direction of the rail (4) and that the running surface (13) is formed such that the track roller (12) can roll on the running surface (13) during the displacement of the slide (11) along the rail (4).

12. Commercial vehicle superstructure according to any one of claims 1 to 11,
**characterised in that**
the locking device (17,48) comprises an actuating means (16,51), which can be operated from below and preferably extends downwards into the loading space relative to the rail (4,32), for adjusting the locking device (17,48) from the locking position into the displacement position and back.

13. Commercial vehicle superstructure according to any one of claims 1 to 12,
**characterised in that**
a rod, a cross brace, a rope, a belt, a strap, a net, a tarpaulin and/or a partition wall is attached directly or indirectly to the fastening section (15,38,42) as a securing means (7,41).

14. Commercial vehicle superstructure according to any one of claims 1 to 13,
**characterised in that**
on two opposite longitudinal sides of the commercial vehicle (31) respectively one rail (4,32) is provided and that on each rail (4,32) at least one load securing device (7,41) is secured.

15. Commercial vehicle superstructure according to any one of claims 1 to 14,
**characterised in that**
two load securing devices (8) are interconnected on opposite longitudinal sides of the commercial vehicle superstructure (1) via at least one, preferably demountable, cross brace.

## Revendications

1. Carrosserie de véhicule utilitaire (1, 31) d'une remorque ou d'une semi-remorque, comprenant au moins un longeron (4, 32) qui s'étend dans le sens longitudinal de la carrosserie de véhicule utilitaire (1, 31), au moins un dispositif d'arrimage de charge (8, 35) destiné au montage d'un moyen d'arrimage (7, 41) se trouvant sur l'au moins un longeron (4, 32), le dispositif d'arrimage de charge (8, 35) possédant au moins un chariot (11, 36) maintenu au niveau du longeron (4, 32) et servant à déplacer le dispositif d'arrimage de charge (8, 35) le long du longeron (4, 32), le dispositif d'arrimage de charge (8, 35) possédant au moins une portion de fixation (15, 38, 42) accessible depuis l'espace de chargement de la carrosserie de véhicule utilitaire (1, 31) et servant à fixer un moyen d'arrimage (7, 41) au dispositif d'arrimage de charge (8, 35),
**caractérisée en ce que**
le dispositif d'arrimage de charge (8, 35) et/ou le longeron (4, 32) possèdent un dispositif de blocage (17, 48) qui peut être positionné depuis une position de blocage dans une position de déplacement et inversement, **en ce que** le chariot (11, 36), dans la position de déplacement du dispositif de blocage (17, 48), est maintenu au niveau du longeron (4, 32) de manière à pouvoir se déplacer dans le sens longitudinal de la carrosserie de véhicule utilitaire (1, 31) et **en ce que** le chariot (11, 36), dans la position de blocage du dispositif de blocage (17, 48), est arrêté au niveau du longeron (4, 32) dans le sens longitudinal de la carrosserie de véhicule utilitaire (1, 31).

2. Carrosserie de véhicule utilitaire selon la revendication 1, **caractérisée en ce que** l'au moins un longeron (4, 32) est associé à un côté long du toit (5) de la carrosserie de véhicule utilitaire (1, 31).

3. Carrosserie de véhicule utilitaire selon la revendication 1 ou 2, **caractérisée en ce que** l'au moins un longeron (4, 32) supporte le toit (5) et/ou est porté par des ranchers (3), qui se trouvent de préférence au niveau des côtés longs et/ou des coins de la carrosserie de véhicule utilitaire (1, 31).

4. Carrosserie de véhicule utilitaire selon l'une des revendications 1 à 3, **caractérisée en ce que** le longeron (4, 32) comporte un canal (9, 33) qui s'étend dans le sens longitudinal de la carrosserie de véhicule utilitaire (1, 31) et ouvert vers l'espace de chargement et **en ce que** l'au moins un chariot (11, 36) est accueilli et maintenu dans le canal (9, 33).

5. Carrosserie de véhicule utilitaire selon la revendication 4, **caractérisée en ce qu'**au moins un rancher (3) est maintenu dans le canal (9, 33) du longeron (4, 32) dans le sens longitudinal de la carrosserie de véhicule utilitaire (1, 31) entre au moins deux chariots (11, 36).

6. Carrosserie de véhicule utilitaire selon l'une des revendications 1 à 5, **caractérisée en ce que** la portion de fixation (15, 38, 42) se trouve au moins avec certaines portions dans l'espace de chargement de la carrosserie de véhicule utilitaire (1, 31).

7. Carrosserie de véhicule utilitaire selon l'une des revendications 1 à 6, **caractérisée en ce que** la portion de fixation (15, 38, 42) possède au moins une ouverture traversante (39, 43) servant à la fixation du moyen d'arrimage (7, 41) et **en ce que** l'ouverture (39, 43) est de préférence configurée sous la forme d'un oeillet servant à accrocher le moyen d'arrimage (7, 41).

8. Carrosserie de véhicule utilitaire selon l'une des revendications 1 à 7, **caractérisée en ce que** le chariot (11, 36) est maintenu par complémentarité de formes par rapport au longeron (4, 32) dans au moins une direction transversale au longeron (4, 32).

9. Carrosserie de véhicule utilitaire selon l'une des revendications 1 à 8, **caractérisée en ce que** le chariot (11, 36) est maintenu par complémentarité de formes et/ou de force le long du longeron (4, 32).

10. Carrosserie de véhicule utilitaire selon l'une des revendications 1 à 9, **caractérisée en ce que** dans la position de blocage, le chariot (36) vient en prise par complémentarité de formes dans un profil (47) qui se trouve de préférence au niveau d'un côté du longeron (32) orienté vers l'intérieur.

11. Carrosserie de véhicule utilitaire selon l'une des revendications 1 à 10, **caractérisée en ce que** le chariot (11) possède au moins un galet de roulement (12) et le longeron (4) au moins une surface de roulement (13) qui s'étend dans le sens longitudinal du longeron (4) et **en ce que** la surface de roulement (13) est configurée de telle sorte que lors du déplacement du chariot (11) le long du longeron (4), le galet de roulement (12) peut rouler sur la surface de roulement (13).

12. Carrosserie de véhicule utilitaire selon l'une des revendications 1 à 11, **caractérisée en ce que** le dispositif de blocage (17, 48) possède un moyen d'actionnement (16, 51), lequel peut être opéré depuis le dessous et s'étend de préférence vers le bas dans l'espace de chargement par rapport au longeron (4, 32), destiné au positionnement du dispositif de blocage (17, 48) de la position de blocage dans la position de déplacement et inversement.

13. Carrosserie de véhicule utilitaire selon l'une des revendications 1 à 12, **caractérisée en ce qu'**une barre, une traverse, une corde, une élingue, une sangle, un filet, une bâche et/ou une paroi de séparation faisant office de moyen d'arrimage (7, 41) sont fixés directement ou indirectement à la portion de fixation (15, 38, 42).

14. Carrosserie de véhicule utilitaire selon l'une des revendications 1 à 13, **caractérisée en ce qu'**un longeron (4, 32) se trouve respectivement au niveau de deux côtés longitudinaux opposés du véhicule utilitaire (31) et **en ce qu'**au moins un dispositif d'arrimage de charge (7, 41) est maintenu au niveau de chaque longeron (4, 32).

15. Carrosserie de véhicule utilitaire selon l'une des revendications 1 à 14, **caractérisée en ce que** deux dispositifs d'arrimage de charge (8) au niveau des côtés longs opposés de la carrosserie de véhicule utilitaire (1) sont reliés ensemble par le biais d'au moins une traverse, de préférence démontable.
